# EUROPEAN PATENT APPLICATION

(11) **EP 3 167 747 A1**
(43) Date of publication of application: **17.05.2017**
(21) Application number: 16198188.1
(22) Date of filing: 10.11.2016
(51) Int. Cl.: A46B 3/08, B60S 3/06, A46B 3/16

(54) **FILAMENT HOLDER**

(30) Priority: 10.11.2015 NL 2015758
(71) Applicant: Wim Muskens Beheer B.V., 5349 TA Oss (NL)
(72) Inventor: MUSKENS, Wilhelmus Henricus Joseph, 5348 JG Oss (NL)
(74) Representative: Vogels, Leonard Johan Paul

(57) **Abstract**

The present invention is in the field of an filament holder for typically automated car cleaning and the like. Car cleaning, or car washing, is typically performed with one or more rotating brushes, which brushes are attached (wrapped around) to a cylindrical element. Car washes can be self-serve, fully automated, or full-service with attendants who wash the vehicle.

## Description

### FIELD OF THE INVENTION

The present invention is in the field of an filament holder for car cleaning and the like.

### BACKGROUND OF THE INVENTION

The present invention is in the field of an filament holder for typically automated car cleaning and the like. Car cleaning, or car washing, is typically performed with one or more rotating brushes, which brushes are attached (wrapped around) to a cylindrical element. Car washes can be self-serve, fully automated, or full-service with attendants who wash the vehicle. Two types of car washes are in particular envisaged: a so called in-bay automatics, which consist of an automatic machine that rolls back and forth over a stationary vehicle; and tunnel washes, which use a conveyor to move the vehicle through a series of fixed cleaning mechanisms. Car washing may comprise various cleaning steps.

The brushes comprise a material to fix the fiber like material to. The fibers typically consist of a soft and flexible material, which upon rotating of the brush extend perpendicular to the brush as a result of centrifugal forces. The brushes, also referred to as wrap around, are typically hand-made, and subsequently attached to a cylinder. Such is expensive and cumbersome.

The fibers are also typically attached to a mat or the like, in such a way that it is difficult to separate the various components from one and another when disposing a used brush. In addition some components of the brush, such as the fibers, may be worn first, whereas other components, such as the mat, may be reused. Reuse of some components is at least difficult, if not impossible, with prior art brushes.

Replacing brushes is typically a time consuming effort, typically involving multiple visits to a car-wash by a brush supplier, and thus involving down-time of the car-wash. In addition the used brush is typically left behind at the car-wash, instead of being properly recycled.

The fibers sometimes get caught between elements extending from the car, such as screen wipers. As a result these extending elements get damaged.

Some fibers leave residues on the cars and may damage the paint of the car.

Some background prior art recite car wash systems, which are considered to suffer from the above disadvantages, amongst others.

DE 20 2008 016321 U1 recites an adapter for a sleeve of a mat for a vehicle washing system and a mat produced therewith, characterized in that one band is or several bands are held in the adapter.

DE 20 2005 001912 U1 recites treatment brushes comprising a support element with flexible treatment elements having a hollow pocket-like rag containing an elastic support unit, and a flexible treatment element for the treatment brushes. Preferred features are that the rag has an elastic support layer and an outer soft hair layer. The rag has a square-like structure.

DE 297 07 225 U1 recites a washer polishing roll for vehicle washing systems, having a tubular shaft, on the cylindrical circumferential surface of which a plurality of washing or washing elements can be mounted in a rotationally fixed manner, characterized in that a plurality of grooves which extend parallel to the shaft axis are arranged in the circumferential surface of the shaft and which are arranged offset from one another in the peripheral direction by the circumferential surface. It is attached with pop-nails to a tube in order to prevent slipping.

Typical fibers used seem to be PE with a thickness of 0.6 mm.

The present invention provides an improved filament holder which overcomes at least one of the above disadvantages, without jeopardizing functionality and advantages.

### SUMMARY OF THE INVENTION

The present invention relates in a first aspect to an filament holder according to claim 1. Therewith the cradle to cradle principle is supported.

The present brush comprises a flexible mat 200. The mat should be flexible enough to be wrapped around a cylinder or the like. Suitable materials for this mat are polymers, such as poly alkanes, poly alkenes, such poly ethylene (PE), and poly propylene (PP). The mat is also preferably from a material that can resist temperatures up to 100 °C, and chemicals typically used in a car wash, such as soap, detergent, wax, and the like.

In order to receive a multitude of fibers for car washing the flexible mat comprises a plurality of receiving elements. These receiving elements are sometimes referred to as "pockets". These receiving elements may be ordered in a systematic manner, such as in a square, rectangular, or hexagonal pattern, or in a chaotic manner, such as random. In between receiving elements typically a space is left blank, that is without fibers. Typically about 20-80% of the surface area of the mat is covered with receiving elements, such as 30-70%.

The receiving element comprises a wall. A height of the wall is typically from 3-40 mm, preferably 5-25 mm, more preferably 10-15 mm. A width of the wall is typically from 3-40 mm, preferably 5-25 mm, more preferably 10-15 mm. A length of the wall is typically from 6-80 mm, preferably 10-50 mm, more preferably 20-35 mm. The wall secures a relative orientation of the fibers in an (seen from the mat) upwards (or perpendicular) position. It has been found that as such damage to a car is reduced or absent, such as damage to wipers.

The receiving element comprises at least one uptake element 12 arranged to fix a removable fixing element.

The receiving element comprises at least one fiber 20 per receiving element, typically 1-20 fibers, preferably 2-10 fibers, more preferably 3-8 fibers, such as 4-6 fibers. The fibers are preferably made of a soft and flexible material, capable of up-taking and releasing soap, water, detergent and polish and the like. Suitable materials are foamed polymers, such as EVA and PE.

In order to firmly fix the fibers to the mat a u-shaped fixing element 30 arranged to keep the at least one fiber in place is provided. The u-shaped fixing element is sometimes referred to as "snapper". The fixing element is preferably a releasable click element; therewith fibers can easily be removed from the brush and be disposed of. The u-shaped element typically has a height similar to the wall, and preferably 1-3 mm smaller. The width is also similar to that of the wall, again slightly smaller (1-5 mm). The length is typically similar to the width. The present u-shaped element can easily be adapted in view of e.g. species of fibers used and requirements thereof.

In order attach the present brush to a cylinder or the like after wrapping it around said cylinder a closing element is provided at a side of the mat. The closing element can be used to fix the present brush to the cylinder or likewise to fixate the present brush around the cylinder.

The present flexible mat is considered to be multifunctional and as a consequence is suited for many types of materials. The flexible mat need not be fixated to a cylinder or the like. Typically the cylinder may be provided with up-taking elements, such as slits or the like, and the mat can be provided with extensions, such as notches, which fit into the up-taking elements. Clearly a mat with up-taking elements and a cylinder with extensions is suited as well. As a result to mat is firmly fixed to the cylinder, and yet can be removed and replaced easily, if required.

The mat may be closed by tieraps or the like. There is no need for drilling.
Er komt dus geen boormachine of ander gereedschap aan te pas.

Thereby the present invention provides a solution to at least one of the above mentioned problems. The various examples and embodiments of the present invention may be combined.

Advantages of the present description are detailed throughout the description.

### DETAILED DESCRIPTION OF THE INVENTION

The present invention relates in a first aspect to a process according to claim 1.

In an exemplary embodiment of the present brush a longitudinal side comprises at least one notch 41 and an opposite longitudinal side comprises at least one extension element 42, wherein the notch and extension element are arranged to fit one and another. The notch and extension element preferably have a rectangular of hexagonal shape. It has been found that by providing notches and extension elements the present brush can be fixated better to e.g. a cylinder.

In an exemplary embodiments of the present brush the wall 11 forms an enclosure 19, e.g. forms a closed structure. In the enclosure the fibers and fixing element are located.

In an exemplary embodiment of the present brush the uptake element is at least one hole 12 in the flexible mat, and typically two holes. The holes are arranged to uptake the legs of the u-shaped fixing element.

In an exemplary embodiment of the present brush the u-shaped fixing element 30 comprises at least one hook 31 at a side thereof, the hook being arranged to fit in the hole of the uptake element. Therewith a firm, but yet releasable, fixing is provided of the element 30 to the mat.

In an exemplary embodiment of the present brush the fixing element comprises a manipulating element 32, such as at least one recess in a bridging part thereof, typically 2-4 recesses. Therewith the fixing element can be easily manipulated and be placed and removed in an automated fashion.

In an exemplary embodiments of the present brush the fixing element comprises a space 33 arranged to allow passage of a fiber, and typically two or more spaces. The space is located at a side of the u-shaped element that is in between the legs thereof. The space is typically concave, and oval or circular. In addition at each side of the space a small tooth shaped element 37 may be provided. Therewith a better wash result is obtained as well as fewer damages.

In an exemplary embodiment of the present brush the closing element 40 is a releasable click element. As such the present brush can easily be attached and removed, e.g. in case of replacement.

In an exemplary embodiment of the present brush a length of the mat is from 10-200 cm, such as 20-100 cm, wherein a width is from 10-50 cm, such as 20-30 cm, and wherein a thickness of the mat is from 2-10 mm, such as 3-5 mm.

In an exemplary embodiment of the present brush the wall 11 has at least one substantial circular section 13, and typically two substantially circular sections. Therewith the fibers can be better positioned and better washing results are obtained.

In an exemplary embodiment of the present brush the wall 11 has at least one expanding section 14 arranged for receiving the fixing element 30.

In a second aspect the present invention relates to a car wash system according to claim 12. The system comprises at least one axis 60, typically 2-5 axis, and

at least one brush comprising the present filament holder 100 according to the invention arranged around the axis. Typically more than one brush may be provided around one axis.

In an exemplary embodiment of the present car wash system the axis is removable. Upon replacement a new, fully furbished axis, is provided. The old axis and worn brush may be removed and taken away for recycling.

In an exemplary embodiment of the present car wash system the axis has a diameter from 75-150 mm, preferably 90-120 mm.

The invention is further detailed by the accompanying figures and examples, which are exemplary and explanatory of nature and are not limiting the scope of the invention. To the person skilled in the art it may be clear that many variants, being obvious or not, may be conceivable falling within the scope of protection, defined by the present claims.

### SUMMARY OF FIGURES

- Fig. 1: shows an assembly of brushes.
- Fig. 2: shows a cross-sectional view A-A.
- Fig. 3: shows details of the present brush.
- Fig. 4: shows details of the present fixing element.
- Fig. 5: shows details of the present brush.
- Fig. 6: shows details of the present closing element.
- Fig. 7: shows a schematic car wash system.

### DETAILED DESCRIPTION OF FIGURES

In the figures:
- 100: filament holder
- 10: receiving element
- 11: wall of receiving element
- 12: uptake element
- 13: circular section
- 14: expanding section
- 19: enclosure
- 20: fiber
- 30: u-shaped fixing element (snapper)
- 31: hook of fixing element
- 32: manipulating element of fixing element
- 33: fixing element space
- 37: tooth shaped element
- 40: closing element
- 41: notch
- 42: extension element
- 60: axis of car wash system
- 200: flexible mat
- 300: car wash system

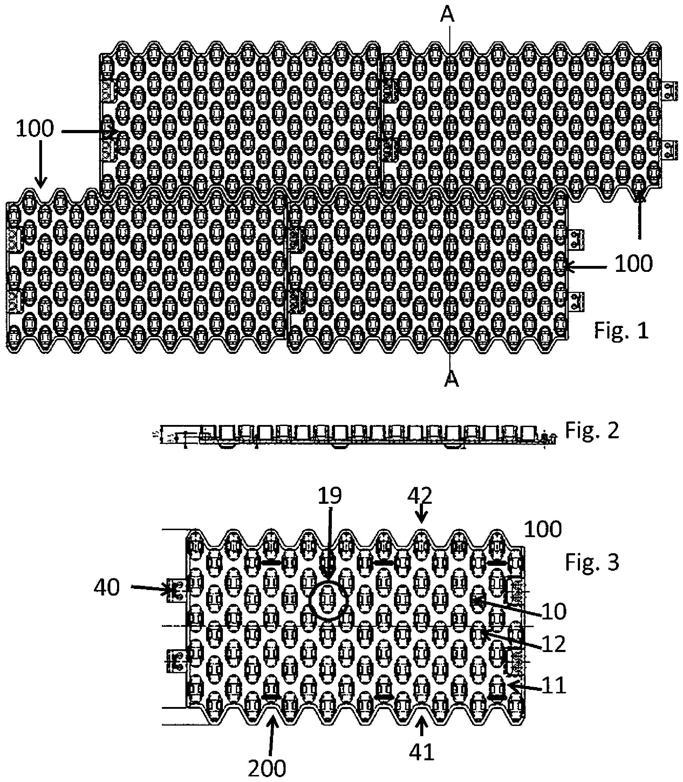

Figure 1 shows 4 brushes according to the invention. Two pairs of brushes are formed by the closing elements at a side of each mat. The two pairs are located in a slightly shifted manner with respect to one and another, due to the notches and extending elements. By slightly shifting a risk of malfunction is reduced.

Figure 2 shows a cross-section A-A of figure 1.

Figure 3 shows details of the present brush. The closing elements 40 are provided at a side of the mate. The wall 11 of receiving element 10 forms an enclosure 19. Each receiving element comprising a hole 12 as uptake element. Notches 41 and extending elements 42 are provided at a longitudinal side of the brush.

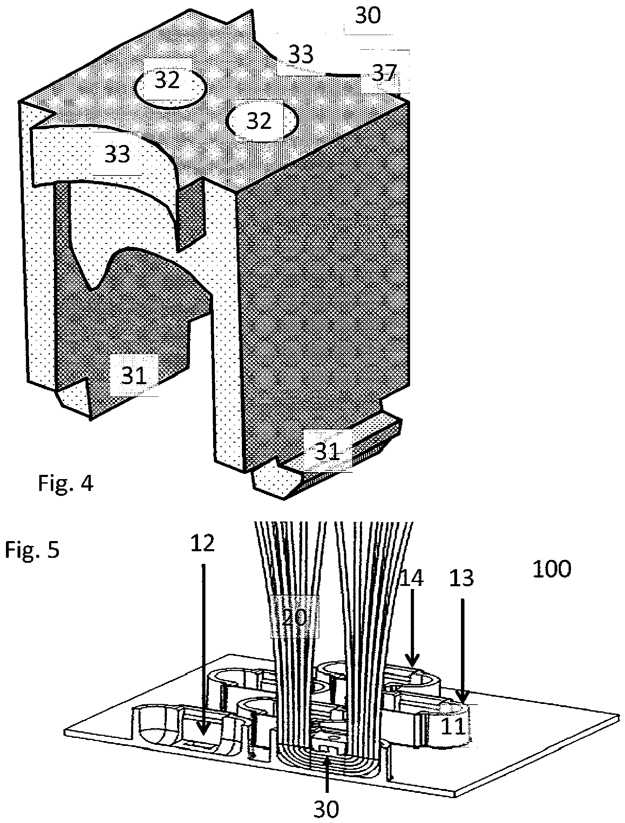

Figure 4 shows a fixing element 30, with at each bottom side a hook 31, a two top sides a fixing element space 33 as well as four tooth shaped elements 37. In addition two holes 32 are provided for manipulating the fixing element.

Figure 5 shows details of the present filament holder 100, having receiving elements with a wall 11 with a circular section 13, expanding sections 14, fixing element 30, holes as uptake elements 12, and fibers 20 positioned in the receiving element and fixed by the fixing element (snapper).

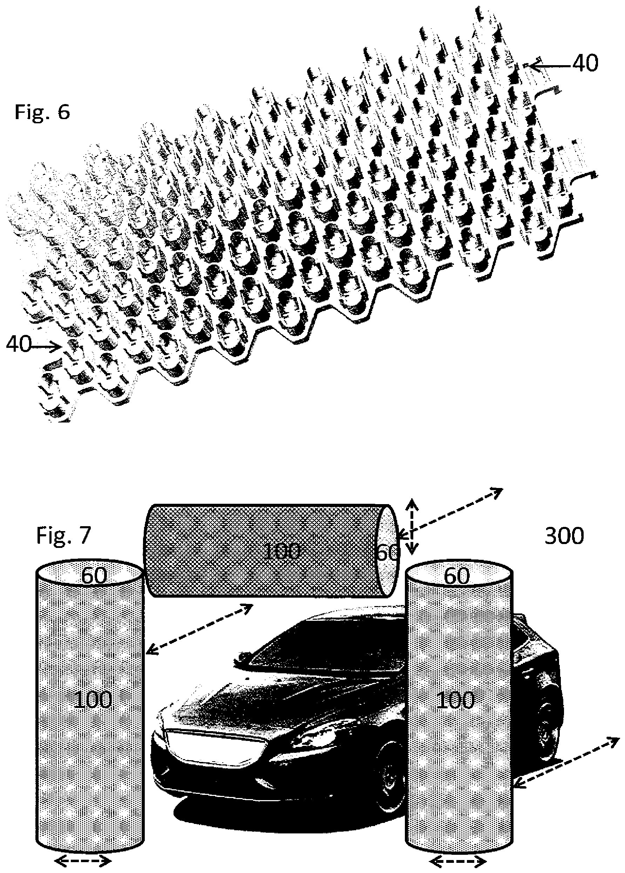

Fig. 6 shows details of the present closing element. The closing element has at a right side in the figure a closing element 40 which is to some extent a u-shaped extension element. This extension has one or two legs which are arranged to fit into the openings of the closing element 40 at a left side of the brush. For instance, by clicking the legs into the openings a firm and reliable and yet releasable closing is provided.

Figure 7 shows schematics of a car wash system 300, with the brushes comprising the present filament holders 100, or a plurality thereof, around cylinders 60.

The invention although described in detailed explanatory context may be best understood in conjunction with the accompanying examples and figures. It should be appreciated that for commercial application it may be preferable to use at least one variations of the present system, which would similar be to the ones disclosed in the present application and are within the spirit of the invention.

## Claims

1. Filament holder (100) for car cleaning comprising
a flexible mat (200),
the flexible mat comprising a plurality of receiving elements (10),
the receiving element comprising
a wall (11),
at least one uptake element (12) arranged to fix a removable fixing element,
at least one fiber (20) per receiving element,
a u-shaped fixing element (30) arranged to keep the at least one fiber in place,
and at least one closing element (40) positioned at a side of the mat.

2. Filament holder according to claim 1, wherein a longitudinal side comprises at least one notch (41) and an opposite longitudinal side comprises at least one extension element (42), wherein the notch and extension element are arranged to fit one and another.

3. Filament holder according to any of the preceding claims, wherein the wall (11) forms an enclosure (19).

4. Filament holder according to any of the preceding claims, wherein the uptake element is at least one hole (12) in the flexible mat arranged to uptake the fixing element (30).

5. Filament holder according to claim 4, wherein the u-shaped fixing element (30) comprises at least one hook (31) at a side thereof, the hook being arranged to fit in the hole of the uptake element.

6. Filament holder according to any of the preceding claims, wherein the fixing element comprises an manipulating element (32).

7. Filament holder according to any of the preceding claims, wherein the fixing element comprises a space (33) arranged to allow passage of a fiber.

8. Filament holder according to any of the preceding claims, wherein the closing element (40) is a releasable click element.

9. Filament holder according to any of the preceding claims, wherein a length of the mat is from 10-200 cm, wherein a width is from 10-50 cm, and wherein a thickness of the mat is from 2-10 mm.

10. Filament holder according to any of the preceding claims, wherein the wall (11) has at least one substantial circular section (13).

11. Filament holder according to any of the preceding claims, wherein the wall (11) has at least one expanding section (14) arranged for receiving the fixing element (30).

12. Car wash system (300) comprising
at least one axis (60), and
at least one brush comprising the present filament holder (100) according to any of the preceding claims arranged around the at least one axis.

13. Car wash system according to claim 12, wherein the axis is removable.

14. Car wash system according to any of claims 12-13, wherein the axis has a diameter from 75-150 mm.

15. Car wash system according to any of claims 12-14, wherein the axis comprises uptake elements, such as slits, and wherein the filament holder comprises extension elements, such as notches.
